# EUROPEAN PATENT APPLICATION

(11) **EP 2 145 679 A1**
(43) Date of publication of application: **20.01.2010**
(21) Application number: 08104782.1
(22) Date of filing: 17.07.2008
(51) Int. Cl.: B01J 23/63, B01D 53/94, B01J 37/02, B01J 35/10

(54) **Multifunctional Catalyst for Diesel Exhaust Gas Cleaning Applications and Method of its Preparation**

(71) Applicant: Ford Global Technologies, LLC, A subsidary of Ford Motor Company, Dearborn, MI 48126 (US)
(72) Inventor: Carberry, Brendan, 52074, Aachen (DE); Chigapov, Albert, 52072, Aachen (DE); Ukropec, Robert, 52072, Aachen (DE)
(74) Representative: Drömer, Hans-Carsten

(57) **Abstract**

The invention relates to a catalyst material for exhaust gas cleaning of combustion engine driven vehicles, especially of Diesel engine vehicles. Another focus of the current invention is a process for the preparation of a catalytic material for exhaust gas cleaning of combustion engine driven vehicles, especially of Diesel engine vehicles as well as the catalyst material obtainable by that process. The invention further relates to a catalyst for exhaust-gas cleaning of combustion engine driven vehicles, especially Diesel vehicles, containing such catalyst materials and further a catalyst system whereby this catalyst is part of said catalyst system.

## Description

The present invention relates to a catalyst for exhaust gas cleaning of combustion engine driven vehicles, especially of Diesel engine vehicles. Another focus of the current invention is a process for the preparation of a catalytic material for exhaust gas cleaning of combustion engine driven vehicles, especially for Diesel engine vehicles as well as the catalytic material obtainable by that process.

The invention further relates to a catalyst for exhaust gas cleaning of combustion engine driven vehicles, especially Diesel vehicles, containing such catalytic materials and further to an aftertreatment system comprising this catalyst.

Catalysts for exhaust gas cleaning of combustion engines are well known. Especially for Diesel engines, there is a large amount of different catalytic materials applied as well as general different types of catalysts are in service.

Currently, two devices are installed in Diesel exhaust systems, namely DOC (= Diesel oxidation catalyst) and DPF (Diesel particulate filter). For Euro 6 applications, the additional device, namely LNT (=Lean NOₓ Trap), or SCR (=Selective Catalytic Reduction) or lean-deNOₓ will be required to cope with nitrogen oxides (NOₓ) emissions.

Many patents describe Diesel oxidation catalysts, like US 6889498 B1, US 2005 160724 A1, WO 2004104389, WO 2001 002083 or WO 2007077462 A1.

A large number of publications in the state of the art, for example US 7287 370 B2, WO 2005/075059 A1, EP 1 147 802 B1, WO 02/22241 A1 and US 2004/0048741 A1 disclose the production of a LNT catalyst. As an example of lean deNOₓ catalyst development, EP 830201 B2 was issued.

One of the possible drawbacks of these solutions for Diesel exhaust gas aftertreatment can be seen in the fact that each of these catalysts can only cope with some of the air pollutants emitted from Diesel engines due to the incompatibility of having different functions in one formulation. In contrast, for gasoline engine, the problem has been solved using a 3-way catalyst, having three different functions of oxidation CO (carbon monoxide), oxidation of HC (hydrocarbons) and NOₓ reduction. However, a 3-way catalyst is typically operated at 500°C and within a narrow range of fuel/air ratio.

This solution cannot be transferred to Diesel engines however due to several reasons. For Diesel engines, exhaust gas temperatures are significantly lower, conditions are typically lean, sulfur and soot is present in the exhaust gas that makes the problem of CO and HC oxidation and especially NOₓ reduction significantly more difficult. To solve the problem of NOₓ reduction, a special device, a so-called LNT (lean NOₓ trap) was developed, which can store NOₓ as nitrates and nitrites under lean conditions and can effectively reduce stored species during short rich pulses. Oxides having strong basic properties like Barium and Strontium, can store nitrates and nitrites, but unfortunately suppress the oxidation function of Pt, as the result LNT cannot cope with CO and HC emissions. On the other hand, the use of a DOC is not effective for NOₓ reduction.

As a result of that incompatibility, two separate devices have to be installed, namely DOC and LNT, to cope with emissions for EURO 6. Both devices have very high platinum group metal (PGM) loadings, which makes them expensive to produce.

Another drawback in connection with this solution is the additional weight and space required for two different devices; especially if these devices have to be mounted in the vehicles under floor section.

Recently, the so-called low-temperature LNTs were developed without having very strong basic oxides and typically are Pt-Rh deposited on alumina or on ceria-alumina, but their activity in CO and HC oxidation is not outstanding, although their oxidizing properties are better than for standard LNT. Another problem is the low NOₓ reduction ability at high temperatures, so this device is still needed standard LNT to operate sufficiently.

A third possible device is so-called lean deNOₓ catalyst. The attempts to develop lean deNOₓ catalyst for Diesel applications were not successful yet due to the limited activity in a narrow temperature range, low NOₓ conversion, low average temperatures and the limited amount of reductants in Diesel exhaust emissions. However, such a solution would be very attractive, because it can operate passively and does not require ammonia like SCR or rich operations like LNT.

It is therefore still highly desirable to create a catalyst device which can cope with all gaseous pollutants of Diesel engines under the corresponding conditions. A further demand for such a catalyst device is that it should also be capable of showing high catalytic activity already at very low temperatures in order to improve exhaust gas cleaning under cold-start conditions and in urban traffic, where exhaust gas temperatures are comparatively low. That is why the development of such a catalyst is of great interest.

These demands are fulfilled with a catalyst for exhaust gas cleaning of combustion engine driven vehicles, especially for Diesel engine vehicles, comprising Platinum and Rhodium combined with (a) Aluminum oxide (Al₂O₃) and Zirconium oxide (ZrO₂), (b) Lanthanum Zirconium oxide (La₂Zr₂O₇) or (c) mixtures thereof on a catalyst carrier material.

It has been surprisingly found that a deposition of Platinum and Rhodium as combination on a preliminary acid-treated cordierite carrier material, which is than covered with Aluminum oxide and Zirconium oxide, Lanthanum Zirconium oxide (La₂Zr₂O₇) or mixtures of these components, coupled with high-temperature calcination before precious metal loading, leads to a catalyst that offer the possibility to create a single Diesel catalyst which can significantly reduce the amount of all critical pollutants CO, HC and NOₓ, emitted from Diesel engines, in one single device.

This catalyst material has the further advantage that it shows already very high catalytic activity with respect to these pollutants at temperatures of 200 °C or below, of about 175 °C or even at about 150 °C, i.e. temperatures that occur under cold-start conditions or during urban traffic.

A preferred embodiment of the catalyst material according to the current invention is characterized by the fact that it comprises at least three layers, one of which contains alumina-washcoated cordierite preliminary modified by acid treatment, the second contains Aluminum oxide and Zirconium oxide, or Lanthanum Zirconium oxide (La₂Zr₂O₇) or mixtures of these (further referred to as "oxide layer"), calcined at temperatures at least or above 800°C, preferably 900°C, the third layer comprises the noble metal, i.e. the layer comprising platinum and rhodium. It is further preferred that the noble metal layer is located on top of the oxide layer and at least partly covering the oxide layer.

According to a preferred embodiment, alumina washcoated cordierite is a preferred carrier material.

Another embodiment of the catalyst material according to the invention is characterized in so far that the catalyst carrier material is acid pre-treated, preferably with oxalic acid, nitric acid, hydrochloric acid or citric acid. From these acids, oxalic acid is mostly preferred.

We have shown in our previous publication ([1]. A.N. Shigapov, G.W. Graham, R.W. McCabe, M. Paputa Peck- and H.K. Plummer. The preparation of high-surface-area cordierite by acid treatment. Applied Catalysis A: General 182 (1999) p. 137-146]) the effect of acid treatment on cordierite, which can produce new monolith carrier having high surface area and modified chemical composition. The acid leaching of cordierite increases the surface area and porosity by dissolution of part of Mg and Al ions from cordierite matrix Mg₂Si₄Al₅O₁₈ with formation of high-surface-area porous silica on the surface of cordierite:

Mg₂Si₄Al₅O₁₈ ----> 4 SiO₂ + 2 Mg⁺² + 5 Al⁺³

We modified however this method for the invention by applying it for acid treatment of alumina-coated cordierite. Hereby acid is acting also on alumina and creating an additional porosity and surface area. The BET surface area after typical acid treatment of alumina-washcoated cordierite in hot oxalic acid for 1.5 hours was increased up to 85m²/g whereas it was only 26m²/g for the original alumina-coated cordierite.

The acid pre-treatment can be carried out under elevated temperatures. So, the temperature for this leaching step can be more than 80°C up to the boiling point of the acid or the acid solution. The best temperature for a specific acid can be found by several experiments as well as the etching/leaching time; the details are described in [1].

We found that such an acid treatment with the following Pt-Rh deposition creates an excellent catalyst having lower light-off temperatures for CO and HC oxidation in comparison with commercial available DOCs, in addition having an excellent lean deNOₓ activity. This high activity is connected with the mentioned above formation of high-surface porous silica having acidic properties and due to the general increase of surface area. This treatment decreased however the performance in NOₓ reduction using lean/rich cycles especially at high temperatures due to the removal of oxides having more basic properties than silica, namely Alumina and Magnesia, therefore the catalyst was not able to store effectively NOₓ species due to the low amount of basic sites.

The second embodiment of this invention is deposition of the new oxide layer into the treated carrier. To improve the performance by addition of oxides having moderate basic properties, we used the secondary re-insertion of small amounts of Alumina together with Zirconia into treated alumina-washcoated cordierite. To create more basic centers, we further used also the addition of zirconia-lanthana mixed oxide La₂Zr₂O₇. The new oxide layer contained alumina-zirconia or La₂Zr₂O₇ or intermediate compositions having a lower amount of La in comparison with Zr.

There are the following important features of this new oxide layer deposition. The loading of Zirconia and Alumina or Zirconia and Lantana was lower than the removed amount of Alumina and Magnesia to keep the high surface area obtained by acid treatment and to keep the silica obtained to provide good CO and HC oxidation properties and deNOₓ activity. After the impregnation with Al and Zr or Zr and La precursors, the samples were calcined at high temperatures exceeding 800°C to provide better interaction with the remaining Alumina after leaching and to stabilize the porous structure created by leaching. Both La and Zr are excellent stabilizers of Alumina and silica against high-temperature sintering. These high-temperature calcinations decrease in addition the basic strength of Zirconia and especially Lanthanum oxide due to the better interaction with less basic Alumina or due to the better interaction with Alumina and Zirconia in case of highly basic Lanthanum oxide. The XRD analysis detected the formation of La₂Zr₂O₇ with distorted structure having basic peak near 29.0° (2θ) and also the formation of LaAlO₃ in case of lantnana-zirconia oxide layer. For alumina-zirconia oxide layer the phase of ZrO₂ was not found due to the good interaction with Alumina. As a result, the basic strength of oxides decreases and do not suppress the activity of noble metals in low-temperature CO and HC oxidation and in lean deNOx reaction. The activity at low temperatures was significantly lower in these reactions without such high-temperature calcinations. The samples obtained after such high-temperature calcinations were heterogeneous containing not only moderate basic but also acid centers of silica. After re-insertion of Alumina with added Zirconia and high-temperature calcinations the obtained samples revealed the same excellent DOC (CO and HC oxidation) and lean deNOₓ properties. There was no more poisoning of Pt activity, but the sample had in addition significantly better activity in NOₓ reduction under alternating lean-rich conditions similar to low-temperature LNT and having improved low-temperature activity at and below 200°C.

According to another embodiment of the catalyst material according to the invention, the catalyst material contains Lanthanum Zirconium oxide (La₂Zr₂O₇), in which up to 50 mol-% of Lanthanum oxide is substituted by Praseodymium, Neodymium and/or Samarium oxide. Such catalyst materials show good catalytic activities at low temperatures.

A further aspect of the current invention is a process for the preparation of a catalytic material for exhaust gas cleaning of combustion engine driven vehicles, especially of Diesel engine vehicles, comprising the steps of
a) Preliminary treatment of a carrier material with an acid;
b) Impregnation of the acid-treated carrier material obtained by step a) with an aqueous or non-aqueous solution of
   ■ Aluminum and Zirconium salt or
   ■ Zirconium and Lanthanum salt or
   ■ Aluminum, Zirconium and Lanthanum salt;
c) Followed by calcination of the product of step b) at a temperature ≥ 800°C;
d) Impregnation of the product of step c) with an aqueous or non-aqueous solution of a Platinum and a Rhodium salt and;
e) Final calcination the product of d) at a temperature ≥ 500 °C.

According to this process, the carrier material is first treated with an acid. This treatment is already described above and can most preferably be carried out with oxalic acid solution. But also other acids can be used as mentioned before.

This etching or leaching of the carrier material is advantageous because it increases the surface area of the carrier material and creates a highly-porous structure containing silica.

These advantageous effects show up especially when the catalyst carrier material is selected from cordierite or cordierite coated with a high-surface-area refractory material. Very good results are obtained with Alumina (Al₂O₃) washcoated cordierite as carrier material, which is therefore preferred.

It has been found that the etching or leaching procedure in principle decreases the catalyst performance under alternating lean-rich conditions due to the removal of more basic Aluminum and Magnesium components from cordierite and part of coated Alumina and due to the appearance of acidic silica, which cannot store NOₓ under lean conditions. However, it has been found that improvement of the catalytic performance under lean-rich conditions can be achieved by re-insertion part of Alumina coupled with the addition of Zirconium oxide after acid treatment. Zirconium oxide (Zirconia) has moderate basic properties like Alumina but they are slightly stronger. In addition, it has been found that Zirconia stabilizes the Alumina surface against sintering during the high temperature calcination step which is very important to preserve high-surface area and modified porous structure after etching and calcination stage.

It is further advantageous to keep the loading of Zirconia and Alumina lower than the removed amount of Alumina/ Magnesia from the carrier material by the leaching step to maintain the high surface area obtained by acid treatment and to keep the silica surface to provide good CO and HC oxidation properties and excellent deNOₓ properties.

The impregnating steps b) and d) can be carried out by wetness impregnation, dosed addition of impregnation solution to support, dip coating, spray coating or other methods, known to a skilled person.

The calcination step c) is carried out at temperatures ≥ 800°C; it is preferred to use higher temperatures as ≥ 850°C or even ≥ 900°C. Those high calcination temperatures are necessary to stabilize the formed porous structure against sintering and to provide a good interaction of new oxide layer with the remaining Alumina to decrease the basic strength of Lanthana and Zirconia by this interaction with less basic Alumina. In addition to Aluminum/Zirconium, Lanthanum/Zirconium, the new oxide layer may also contain Praseodymium, Neodymium and/or Samarium as described above.

For the good performance as multi-functional catalyst material in Diesel vehicles, the presence of Zirconium and also Lanthanum is important as it prevents the alumina from sintering during this high temperature calcination step and thus preserves the high surface area which is important for the good performance as multi-functional catalyst material in Diesel vehicles.

The calcination step e) is carried out at temperatures ≥ 500°C; it is preferred to select higher temperatures as ≥ 550°C or even about 600°C. These calcination temperatures provide good interaction of the noble metal components with the modified substrate and the new zirconium-containing layer obtained by the steps b) and c).

In a further preferred embodiment of the process according to the invention, the impregnating step b) and/or d) is carried out in the presence of citric acid and/or a salt of citric acid. The use of these components has the advantage that they act as complexing agents and can slowly replace nitrate anions, especially from the Rhodium precursor during the drying step. In comparison to nitrates, citrates are less volatile and formed nitric acid slowly evaporates during the drying. In case Rhodium nitrate is chosen as Rh-precursor, the replacement of nitrate by citrate increases the dispersion of noble-metal components due to the formation of very soluble amorphous metal citrates. Thus, the deposition of nitrates is prevented, which leads to bad dispersion due to the formation of large crystals of metal nitrates.

According to a further preferred embodiment of the process according to the current invention, impregnating in step d) is carried out in the presence of urea. If the sample is dried after impregnation, especially under elevated temperatures, urea is slowly decomposing at temperature of drying (88° C) with formation of ammonia and CO₂, having opposite properties of increasing solubility due to the formation of more soluble complexes with ammonia and less soluble carbonates. This feature provides multiple deposition-dissolution with formation of fine particles of noble metals as can be seen visually during the prolonged drying.

In combination with the presence of citrates and/or citric acid, the ammonia with formation of ammonium hydrogen citrate will work as a buffer under the conditions of the current process and provides an optimal acidity of solution. Furthermore, ammonia ions act as complexing ions. Most preferable was the addition of ammonium hydrogen citrate together with citric acid and urea during the deposition of noble metals, because an excess of citric acid may dissolve the structures formed during high-temperature calcinations.

In case of the Platinum precursor is diamine platinum (II) hydroxide, it is advantageous to add citric acid in an amount just enough to neutralize the hydroxide which is contained in the diamine platinum (II) hydroxide.

All the added components, i.e. citric acid, ammonium hydrogen citrates and urea are also providing a soft reduction of noble metal precursors to fine metallic particles already during a drying step, if a drying step is used after impregnation before calcination.

According to another preferred embodiment of the process according to the current invention, impregnating in step b) and/or d) is followed by a drying step at a temperature ≤ 120 °C, preferably ≤ 100 °C. As described above, a very "soft" drying procedure has several advantages, especially in combination with the use of urea and/or citrates or citric acid respectively. The slow decomposition of urea already imposes chemical reactions on the noble metal precursors and leads to structural changes which finally improve the overall catalytic activity of the catalytic material as the product of this process. The drying temperature can be chosen to be not only less than stated above but also be at least about 70 °C, or at least about 80 °C. In case urea is used, a drying temperature between 80 °C and 100 °C is preferred, as in this temperature window the above mentioned reactions take place with an adequate rate during reasonable time and at the same time the favorable structural changes can occur as well. The drying time is preferably more than 6 h, more preferably more than 12 h, or even more than 18 h.

To provide such multiple deposition-dissolution processes, it is further preferred to use the very slow rate of drying. This cannot only be controlled by the drying temperature, but by the size of the drying container as well. Therefore, it is preferred if a container which can be closed by a cap is used for drying. It is further preferred, if the volume of this drying container is only slightly bigger than the outer size of the catalyst, i.e. not more than 40 % bigger, preferably not more than 25 % bigger, most preferred not more than 10 % bigger. Such a drying process provides a method to obtain noble metal particles having a good dispersion and leads to catalysts with good activity with a relatively low technical effort.

According to another embodiment of the method according to the current invention, the aqueous or non-aqueous solution in step b) further contains Praseodymium, Neodymium and/or Samarium salt, preferably if the solution in step b) contains a mixture of Zirconium and Lanthanum salt. In such a case the amount of Praseodymium, Neodymium and/or Samarium is preferably less or equal to the amount of Lanthanum. It is therefore a further preferred embodiment, that such a solution contains a ratio of Praseodymium, Neodymium and/or Samarium to Lanthanum of up to 1:1. This leads after calcination to Lanthanum-Zirconium oxide, in which at least 50 % of Lanthanum is substituted by Praseodymium, Neodymium and/or Samarium.

A further aspect of the current invention is a catalytic material for exhaust gas cleaning of combustion engine driven vehicles, especially of Diesel engine vehicles, which can be prepared by a process according to the current invention as described above. Such a catalyst has several advantages that can overcome the drawbacks of catalysts known from prior art.

Such a catalyst opens the possibility to provide a multi-functional catalyst which is capable to clean exhaust gases from CO and HC by oxidation and NOₓ by reduction. The catalyst can effectively reduce these pollutants at relatively low temperatures of 200 °C or less, even at 150 °C or less. This means, this catalyst can operate under cold-start conditions as well as in urban traffic, e.g. under conditions where exhaust gas temperatures are in the above mentioned range which are typical for Diesel passenger cars and which are too low for common catalysts to work properly.

An additional advantage arises from the fact that the need of now only one catalyst according to this invention can substitute two different catalysts commonly used in Diesel cars, namely a DOC and NOₓ-trap, which results in saving space and weight. Finally, the overall amount of noble metals needed to provide a good performance with necessary catalyst(s) is reduced as well.

In other words, the multifunctional catalyst for Diesel applications can oxidize CO and HC at lower temperatures than commercial Diesel oxidation catalysts (DOCs), and in addition can significantly reduce NOₓ emissions passively under typical lean cold-start conditions using CO and HC emitted from the Diesel engine as reductants for lean deNOₓ at temperatures below 200°C. At higher temperatures, it can effectively reduce NOₓ emissions under lean-rich conditions up to 350°C better than commercial LNTs (lean NOₓ traps). So this catalyst can be effectively functioning as DOC, lean deNOₓ catalyst and low-temperature lean NOₓ trap (LNT) together, providing pollutants reduction under different conditions of Diesel engine exhaust gas emissions. It has also relatively good NOₓ storage adsorbing properties at low temperatures and can oxidize NO to NO₂.

This multifunctional catalyst can be used as universal device installed upstream of a DPF (Diesel particulate filter) or as pre-catalyst for a LNT or a SCR using ammonia, installed instead of a DOC.

It is therefore another aspect of the current invention to provide a catalytic system for combustion engine driven vehicles, especially Diesel engine vehicles, containing a catalyst according to the current invention and at least one further exhaust gas cleaning device like a DPF, LNT or SCR. This means a combination of a catalyst according to the current invention with a known catalyst to provide an even higher efficiency over a broader temperature range. The catalyst according to the current invention can be combined with a Diesel Particle Filter (DPF) as further exhaust gas cleaning device whereby the DPF is installed downstream from the catalyst to provide such a catalyst system. In such an arrangement, where the catalyst according to this invention is installed next to the engine, the exhaust gas is pre-cleaned by the catalyst and then enters a DPF. It can be used as a pre-catalyst for a LNT or SCR using ammonia or urea solution, whereby the catalyst is installed instead of DOC as well.

This aspect is especially important in heavy duty applications, in which the used catalysts are designed to operate at high temperatures. Because prior art catalysts have a quite narrow temperature window of optimum operation, these catalysts show even a poorer activity at low temperatures. The combination with a catalyst of this invention, which is highly active at low temperatures, can overcome the problem of low-temperature performance for combined devices.

A further aspect of the current invention is the use of a catalyst according to this invention or a catalytic material which can be prepared by a process according to the current invention for the production of a multi-functional catalyst for exhaust-gas cleaning of combustion engine driven vehicles.

Another aspect of the current invention is the use of a catalyst according to this invention or a catalytic material which can be prepared by a process according to the current invention for the production of a pre-catalyst for LNTs or SCR catalysts.

### Examples:

### Catalyst preparation:

The preparation process for the individual samples was as follows:

All catalyst compounds were prepared on an alumina-coated cordierite core substrates having a cell density of 400 cpsi (= 'cells per square inch') with a 38% by weight alumina loading, having a size of 1 inch in diameter and 1.5 inches length. The core samples were drilled from alumina-coated cordierite monolith.

### Example1 (invention): Pt-Rh-ZrO₂/acid treated alumina-cordierite

### Step 1: Acid treatment

The core sample 9.25g was treated with a solution of 5.7g oxalic acid in 50 ml of distilled water at 97°C for 90 minutes with the following washing using distilled water and drying at 150°C. The core weight after acid treatment was 8.62g. The BET surface area increased from 26 m²/g for initial alumina-washcoated cordierite to 85 m²/g .

### Step 2: Impregnation with zirconia-alumina

The core sample was impregnated with a solution containing 0.78g of zirconyl (IV) nitrate, 35 wt.% solution in diluted nitric acid, 0.44g of Aluminum nitrate monohydrate , 1.2 g of citric acid and 1.3g of distilled water with the following drying overnight at 88 °C in a closed container.

### Step 3: High-temperature treatment

The core sample was calcined at 900°C in the air for 2 h.

### Step 4: Pt-Rh deposition

The core sample was impregnated with a solution containing 0.912g of diamine-platinum (II) hydroxide solution (9.09% Pt), 0.022g of rhodium (III) nitrate dihydrate (Rh 31.1%), 0.66g citric acid, 1.01g urea, 0.21g of ammonium hydrogen citrate. Pt loading was 120 g/ft³ (4.2 mg/cm³), Rh loading was 10 g/ft³ (0.35 mg/cm³). The sample was dried for 16 hours in a closed container at 88°C and finally calcined at a temperature of 600°C for a period of 2 hours.
The final weight of core sample was 8.78g.

### Example 2 (invention): Pt-Rh-La₂Zr₂O₇/acid treated alumina-cordierite

The sample was prepared as described in example 1, but for step 2, the impregnation was carried out with a solution containing 0.77g of zirconyl nitrate and 0.36g of lanthanum nitrate hexahydrate together with 1.2g of citric acid and 1.3g of distilled water. The initial weight of core was 9.15g and the final weight was measured as 8.92g.

### Reference samples

Commercially available DOCs (Diesel Oxidation Catalysts), platinum-only and platinum-palladium, and also low-temperature LNT (without Ba) and standard Ba-containing LNTs were used as reference catalysts, more specifically (loading of precious metals is in g/ft3):
Reference DOC sample A: 150 platinum (Pt) (DOC-Pt 150) (5.3 mg/cm³)
Reference DOC sample B: 120 Pt 120 Pd (DOC Pt-120, Pd 120) (4.2 mg/cm³)
Low- temperature LNT (LT-LNT): 120 Pt /10 rhodium (Rh) (4.2 and 0.35 mg/cm³ correspondingly)
Standard LNT (LNT) 100 Pt/ 20 Rh (3.5 mg/cm³ Pt and 0.7 mg/cm³ Rh).

All reference samples were calcined at the same conditions at 600 °C for 2 h in the same way as the samples which are presenting the current invention; the size of all tested samples was the same

### TESTING

All catalysts were tested in a laboratory-scale packed-bed flow reactor made from a 1" ID x 4" L quartz tube. An electric furnace was used for the heating of the reactor.

A core catalyst sample was inserted into quartz tube, wrapped with matting material, together with two thermo-couples inserted 5 mm right before and behind core sample. A conventional flow setup was used for gas mixture preparation. All gases were of ultra high purity. Humidifier was installed to provide precise water concentration in the gas line. The flow rates were controlled using mass flow controllers (MKS, Munich, Germany). To prevent water condensation, all connection lines were installed in a thermal box maintaining constant temperature of 85°C. Reactor effluents were analyzed with a HP 6890A gas chromatograph, using Porapak Q and NaX capillary columns. Chemiluminescence NO/NOₓ analyzer (Eco-physics company) CLD-700 was used for continuous NO and NOₓ determination.

### Lean De-NO_{X} study:

The core catalysts according to this invention and commercially available reference samples were exposed to reaction mixture simulating typical cold-start conditions of Diesel engine: NO 200 ppm; CO 0.125%, C₃H₆ 200 ppm, C₃H₈ 50 ppm, CO₂ 5.0 %, H₂O 5.0%, O₂ 10%; N₂ balance, SV=10 000 h⁻¹. The reaction temperature was increased by steps of 25°C after reaching the steady-state NO conversion.

### CO/HC oxidation light-off study:

Carbon monoxide and hydrocarbons light-off performance for the catalysts of the present invention and reference catalysts were carried out using the same reaction mixture as for lean De-NOx study, simulating cold-start conditions for Diesel engine: NO 200 ppm; CO 0.125%, C₃H₆ 200 ppm, C₃H₈ 50 ppm, CO₂ 5.0 %, H₂O 5.0%, O₂ 10%; N₂ balance, SV=10 000 h⁻¹. The temperature ramp was selected as 1.5 °C/minute combined with analysis of gas effluents by gas chromatography.

### Lean/rich alternate conditions:

A core sample was placed into the reactor and was exposed to lean reaction mixture for 60 s and then lean mixture was completely exchanged for rich mixture for 10s; then such a cycle was repeated many times until the steady-state NOₓ conversion was obtained at different temperatures, typically within 30-40 minutes. NOₓ conversion was calculated as an integral difference between inlet and outlet NOₓ concentrations for last 10 cycles upon reaching the state-state NOₓ conversion. Both mixtures were supplied using separate lines equipped with mass-flow controllers and mixtures were alternated automatically by 6-way valves rotation, using computer software.
SV = 10000 h⁻¹, feed flow rate 3.3 l/min
Lean conditions: NO 750 ppm, O₂ 10.0 %, CO₂ 5.0 %, H₂O 5.0%, N₂ balance; t = 1 min.
Rich conditions: C₃H₆ 0.33%, CO 2.0%, O₂ 0.5 %, CO₂ 5.0 %, H₂O 5.0%, N₂ balance; t = 10sec.

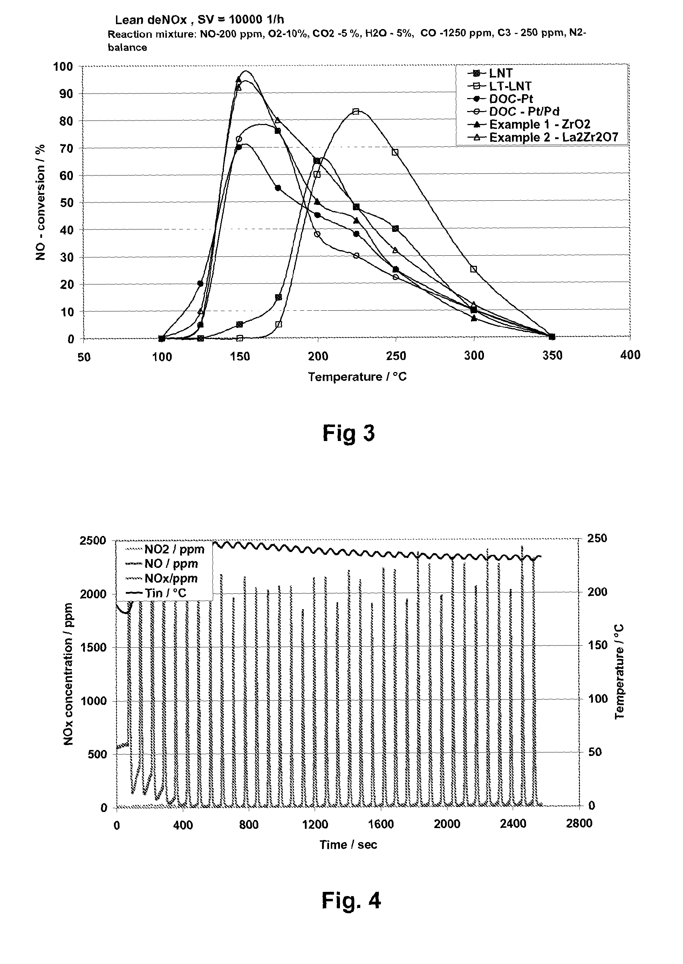

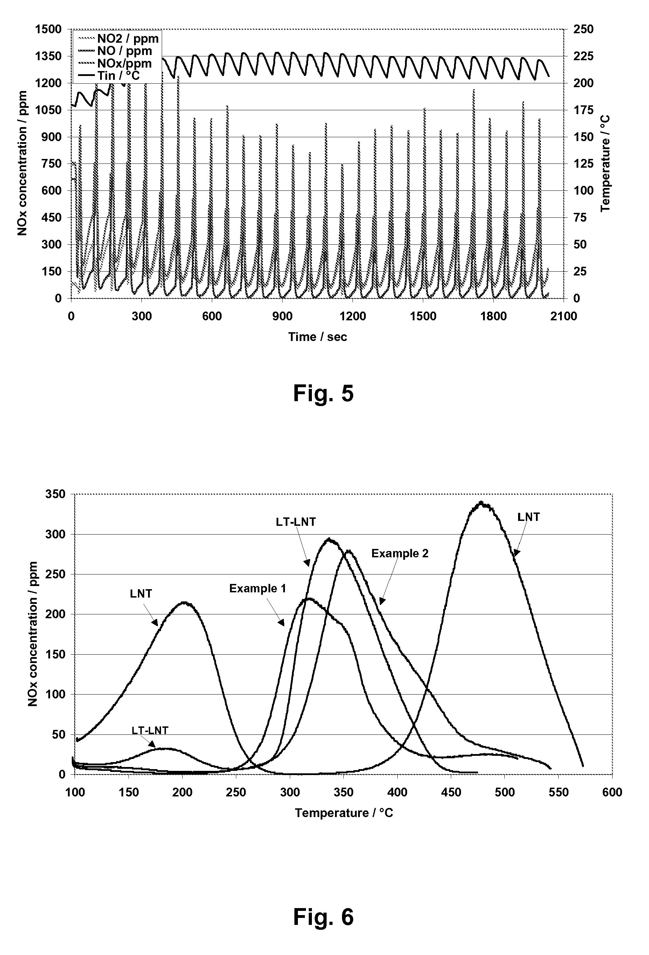

The typical NOₓ profile for such alternating rich/lean conditions is presented on Fig. 4 and 5.

### NO oxidation conditions:

Reaction mixture: NO 750 ppm, CO₂ 5%, H₂O 5%, O₂ 10%, N₂ balance was used for NO oxidation study. The NO conversion to NO₂ was measured after reaching the steady-state conversion at different temperatures with 25 °C steps.

### NO adsorption- desorption study:

NO adsorption was evaluated using the following mixture: NO 750 ppm, CO₂ 5%, H₂O 5%, O₂ 10%, N₂ balance.

The test was carried out until NO₂ concentration reached the initial level. The inlet concentration of NO₂ was analyzed from time to time to ensure constant NO₂ concentration in the reaction mixture. For some samples, the NO₂ outlet concentration did not reach the initial level for a long time. In this case, the sample was tested during definite selected time (3 hours, 6 hours, and 12 hours). For some samples the appearance of NO was observed; in this case, total NO plus NO₂ concentration was taken into account and determined as NOx concentration.

Adsorption isotherms were measured from 100 to 350°C with 50°C steps. Adsorption capacity was calculated as an integral value of the difference between inlet and outlet NOₓ concentrations (NO plus NO₂ concentration). Accordingly, the retention (break-through) time Z (sec) was measured as a time when NOₓ concentration was less than 5 ppm until NOₓ concentration exceeded this level. Temperature-programmed desorption (TPD) study was performed after each adsorption experiment with selected temperature ramp of 10 °C/minute, using the same reaction mixture but without NO. NO desorption was carried out until 600°C. Typically, this temperature was enough (with some exceptions) to remove all adsorbed NOₓ species.

The invention is further described with reference to the figures, in which is shown:
- Figure 1:: Comparisons of CO light-off performance for samples of the current invention (Example 1 and 2) and commercial DOC and LNT catalysts. LT-LNT means low-temperature LNT sample.
- Figure 2:: Comparisons of CO light-off performance for samples of the current invention (Example 1 and 2) and commercial DOC and LNT catalysts. LT-LNT means low-temperature LNT sample.
- Figure 3:: Activities in lean deNOₓ for samples of the current invention (Example 1 and 2) and commercial DOC and LNT catalysts.
- Figure 4:: Commercial standard LNT under lean-rich cycles at T =200°C. Lean conditions: NO 750 ppm , O₂ 10.0 %, CO₂ 5.0 %, H₂O 5.0%, N₂ balance t = 1 min. Rich conditions: C₃H₆ 0.33%, CO 2.0%, O₂ 0.5 %, CO₂ 5.0 %, H₂O 5.0%, N₂ balance; t = 10sec. SV = 10000 h⁻¹, feed flow rate 3.3 l/min.
- Figure 5:: Sample Example 2 under lean-rich cycles at T =200°C. Lean conditions: NO 750 ppm, O₂ 10.0 %, CO₂ 5.0 %, H₂O 5.0%, N₂ balance; t = 1 min. Rich conditions: C₃H₆ 0.33%, CO 2.0%, O₂ 0.5 %, CO₂ 5.0 %, H₂O 5.0%, N₂ balance; t = 10sec. SV = 10000 h⁻¹, feed flow rate 3.3 l/min.
- Figure 6:: NOₓ desorption after NO adsorption at T=100°C for different catalysts
- Figure 7:: NO oxidation properties of different catalysts. Reaction conditions: NOx-750 ppm, O₂ 10%, CO₂ 5 %, H₂O 5%, N₂ balance, SV =10000 h⁻¹

### CO and propylene light-off under cold-start conditions:

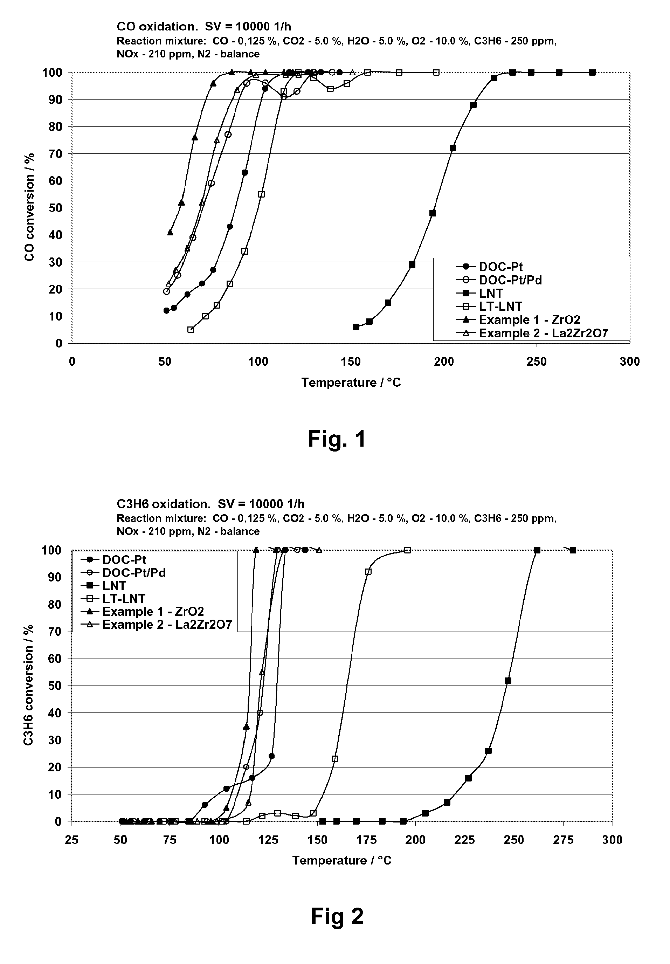

The Diesel oxidation catalyst should provide the oxidation of unburned CO (carbon monoxide) and HC (hydrocarbons) in the engine at temperatures as low as possible. The typical exhaust temperature of Diesel passenger cars are very low, the average temperature of exhaust in only 150 °C for ECE (the low-temperature part of NEDC European legislative driving cycle simulating cold-start and city driving). So the catalyst should cope with those emissions and provide complete oxidation of mentioned pollutants below 150 °C. Modern DOC having high Pt loading can hardly cope with this task. As one can see on Figure 1, CO light-off temperature estimated as T₅₀; temperature of 50% CO conversion, is close to 90 °C with complete 100% CO conversion at 117 °C for high-Pt loaded (150 g/ft³) commercial DOC catalyst.

The sample from Example 1 was the most active in CO oxidation followed by the sample presenting Example 2. The best from commercial samples was Pt-Pd DOC, having similar performance to the catalyst from Example 2. The low-temperature LNT has shown CO oxidation activity close to DOCs performance but it was significantly less active in propylene oxidation, however standard LNT had very low activity.

Summarizing, the samples presenting this invention, have shown better DOC performance than commercial DOCs and LNTs having high noble metal loading.

### Lean deNOₓ activity

As it has been mentioned above, the attempts up to now to create lean deNOₓ catalysts able to reduce passively NOₓ emissions were not successful due to the limited activity in narrow temperature range. Taking into the account the opportunity for modern Diesel engines to use alternate lean-rich cycles, the activity in lean deNOₓ may be however important to solve cold-start problem and to provide NOₓ reduction at low temperatures. Current LNT, including low-temperature LNT, cannot work effectively below 200 °C, in addition it is a problem to create periodical rich conditions at such low temperatures, because additional hydrocarbons, which are injected to create such rich conditions cannot be effectively oxidized by DOC and will lead to HC slip.

One of the ways to solve this problem is to accumulate NOₓ species for example on LNT or another specialized accumulator at low temperatures and to convert it at more favorable temperatures. This approach is not reliable however due to the low capacity of NOₓ accumulation and because such an accumulator may be not free from NO before the engine start or due to the long exposure to low temperatures.

The catalyst of this invention can however effectively convert NOₓ at low temperatures by another way for the account of lean deNOₓ activity using CO and hydrocarbons, which are always available from the Diesel engine under these low-temperature conditions, meaning within temperature ranges below 200°C.

Lean deNOₓ activity has been tested under typical cold-start conditions as shown in Figure 3, using typical HC and CO concentrations from the engine and even higher NO concentration, which is typically near 100 ppm, while in this case, 200 ppm was selected to make the conditions even less favorable for NOₓ reduction.

Nevertheless, as one can see on Figure 3, the samples 1 and 2 present a big breakthrough in this direction, providing 90-95% NOₓ reduction already at 150 °C, whereby 150 °C is the average temperature of low-temperature ECE part of European driving cycle for Diesel passenger car.

This feature can provide an effective way for NOₓ reduction at low temperatures. Good activity was still found at 175 °C, and catalysts, presenting this invention had a reasonable NOₓ conversion up to 200°C. Sample 2 based on La₂Zr₂O₇ had some advantage here providing higher NOₓ conversion at temperatures above 150 °C in comparison with sample 1 of the invention which is based on ZrO₂. Commercial DOCs displayed significantly lower NOₓ conversion, but in the same temperature range. For standard commercial LNT and low-temperature LNT, the activity shifted to higher temperature region as expected. Low-temperature LNT has shown quite good NOₓ conversion above 80% but only at 225 °C. Both LNTs cannot provide NOₓ reduction for the account of lean deNOₓ process during ECE part of European driving cycle, having too low activity below 200 °C.

Summarizing, the samples representing the invention have shown the best properties for lean deNOₓ process with high NOₓ conversions at low temperatures.

### NOₓ reduction under lean-rich conditions (LNT mode)

First the samples of the invention and reference samples were tested under alternate lean-rich conditions similar to those for standard LNT applications. Though only space velocities of 10 000 h⁻¹ were applied, the concentration of NO was significantly higher, 750 ppm instead of typical NO concentration near 200 ppm. Such conditions are corresponding to SV near 40 000 h⁻¹ with typical NO concentration. High NO concentration here demands high NOₓ adsorption capacity from the catalyst. The data are presented in Table 1.

**Table 1: NOₓ-reduction under lean-rich conditions at different temperatures, SV = 10000 h⁻¹, NO 750 ppm, feed flow rate 3.3 l/minute. Lean conditions: NO 750 ppm, O₂ 10.0 %, CO₂ 5.0 %, H₂O 5.0%, N₂ balance, t = 1.0 min. Rich conditions: C₃H₆ 0.33%, CO 2.0%, O₂ 0.5 %, CO₂ 5.0 %, H₂O 5.0%, N₂-balance; t = 10 sec.**

| Catalysts | NOₓ conversion / % | | | | | |
|---|---|---|---|---|---|---|
| | 175 °C | 200 °C | 250 °C | 300 °C | 350 °C | 400 °C |
| Example 1 - ZrO₂ | 38 | 66 | 79 | 63 | 36 | 7 |
| Example 2 - La₂Zr₂O₇ | 26 | 61 | 87 | 83 | 71 | 36 |
| DOC - Pt | 17 | 32 | 30 | 10 | 6 | 5 |
| DOC - Pt/Pd | 24 | 60 | 45 | 37 | 20 | 5 |
| LNT | 13 | 47 | 86 | 84 | 78 | 67 |
| LT-LNT | 23 | 43 | 73 | 72 | 54 | 21 |

As can be seen, the catalysts of the present invention have shown better activity at low temperatures for LNT mode of operation in comparison with commercial LNTs and DOCs at low-temperature regions of 175-200°C. Catalyst example 1 of the invention had the highest activity at these temperatures and kept good NOₓ conversion up to 250°C, but was less effective at higher temperatures. Catalyst of example 2 presenting more basic La₂Zr₂O₇ formulation, followed Example 1 at low temperatures, but has shown surprisingly good performance at 200-350°C having near the same NOₓ conversion as standard LNT at 200-300°C and more than 70% NOₓ conversion even at 350°C. The conversion was still reasonable at 400 °C but significantly lower than for standard LNT. Low-temperature LNT was better than standard LNT only at 175 °C and was not able to compete with standard LNT at higher temperatures, having also always lower NOₓ conversion than Example 2, but better than Example 1 at and above 300°C. Pt-Pd DOC had surprisingly good performance at 175-200°C but had a poor performance at higher temperatures; Pt-only DOC had the worst performance.

In addition, the catalysts were tested under the same conditions but using NO concentration of only 200 ppm. Such conditions are more favorable for low-temperature LNT operations with low vehicle speed, low temperatures and low NOₓ level; the low-temperature LNT is designed for such conditions to provide better activity at low temperatures. Also extended testing at low-temperature region of 125-150°C was carried out to study if lean-rich conditions can be effective at these temperatures in comparison with passive lean-deNOₓ conditions. The data are shown in Table 2.

**Table2: NOₓ-reduction under lean-rich conditions at different temperatures, SV = 10000 h⁻¹, NO 200 ppm; SV = 10000 h⁻¹, NO 200 ppm, feed flow rate 3.3 l/minute. Lean conditions: NO 750 ppm, O₂ 10.0 %, CO₂ 5.0 %, H₂O 5.0%, N₂ balance, t = 1.0 min. Rich conditions: C₃H₆ 0.33%, CO 2.0%, O₂ 0.5 %, CO₂ 5.0 %, H₂O 5.0%, N₂ balance, t = 10 sec.**

| Catalysts | NOₓ conversion / % | | | | |
|---|---|---|---|---|---|
| | 125 °C | 150 °C | 175 °C | 200 °C | 350°C |
| Example 1 - ZrO₂ | 24 | 37 | 70 | 100 | 58 |
| Example 2 - La₂Zr₂O₇ | 35 | 43 | 68 | 100 | 98 |
| DOC - Pt/Pd | 9 | 26 | 47 | 100 | 53 |
| DOC - Pt | 4 | 22 | 29 | 50 | 8 |
| LNT | 6 | 10 | 15 | 78 | 93 |
| LT-LNT | 22 | 32 | 62 | 100 | 84 |

As one can see from this table, the samples of the invention again were the best at low temperatures and Example 2 was the best at all temperatures tested, including 350 °C. The catalysts with limited NOₓ storage capacities were more effective under such testing conditions due to the low NO concentration. As an example, low-temperature LNT had a definite advantage here before standard LNT, but revealed lower activity than the samples of the current invention.

As a summary of this part, both catalysts representing this invention were more active for these two types of testing at low temperatures and the sample Example 2 surprisingly was able to compete with standard LNT up to 350°C despite of its limited NOₓ adsorption capacity, even under these severe conditions, simulating heavy-load conditions with NO concentration 750 ppm.

From the testing in LNT mode, presented in Figures 4 and 5, the difference of catalysts of the invention (Example 2) and standard LNT is pictured. The sample of Example 2 has a limited NOₓ storage capacity and one can see that the NOx concentration was rising during the lean time, but the catalyst compensated it by good NOₓ reduction during the rich pulses. Standard LNT was very effective in NOₓ storage during the lean time, with complete elimination of NO, but was not very effective in NOₓ reduction during the rich time that led to sharp NO peaks exceeding 2000 ppm.

### NOₓ adsorption properties

Measuring of NOₓ adsorption capacity and adsorption-desorption behavior can give an additional information about catalysts. The data are presented in Table 3. The catalysts of present invention had quite low NOₓ adsorption capacity, as it was expected.

**Table 3: NOₓ adsorption capacity at different temperatures Adsorption mixture: 750 ppm NOₓ, O₂ 10 %, CO₂ 5 %, H₂O 5%, N₂ balance, SV=10000 1/h; V = 3.3 l/min**

| Catalyst | Adsorption capacity, mmol NOₓ / core | | | | | |
|---|---|---|---|---|---|---|
| | 100 °C | 150 °C | 200 °C | 250 °C | 300 °C | 350 °C |
| Example 1-ZrO₂ | 0.24 | 0.39 | 0.49 | 0.64 | 0.44 | 0.21 |
| Example 2 - La₂ Zr₂O₇ | 0.26 | 0.33 | 0.56 | 0.69 | 0.57 | 0.46 |
| LNT | 0.74 | 0.96 | 0.98 | 1.51 | 1.67 | 1.54 |
| LT-LNT | 0.43 | 0.54 | 0.80 | 0.84 | 0.67 | 0.50 |
| DOC-Pt | 0.19 | 0.28 | 0.38 | 0.29 | 0.25 | - |
| DOC-Pt-Pd | 0.57 | 0.60 | 0.69 | 0.60 | 0.41 | 0.34 |

The adsorption capacities of invention samples were significantly lower than for standard LNT and lower than for low-temperature LNT and even lower than for Pt-Pd DOC up to 250°C. Low-temperature LNT had also a very limited NOₓ storage capacity. It is necessary to note that adsorption sites are vulnerable to sulfur poisoning and it is much easier to recover the sulfated catalyst with low adsorption capacity by desulfurisation. It depends also on the basic strength of NOₓ-storing oxides, as a rule, the very basic oxides like barium oxide can store NOₓ up to very high temperatures, Barium nitrate decomposes above 500 °C, but it is very difficult to remove sulfur and such catalyst needed long desulfurisation time at 650 °C under rich conditions. In addition, sulfur was never completely removed from such catalysts. In contrast, low-temperature LNT Pt-Rh/alumina can be easily desulfurised at 600 °C.

The Figure 6 is presenting desorption from the catalysts of the invention, low-temperature and standard commercial LNTs. It can give additional information on catalysts.

As can be seen, standard Ba-containing LNT has the strongest basic properties, storing NOₓ up to 575 °C and in addition shows also a low-temperature peak, with only NO release at low temperatures, so the desorption profile contains 2 peaks, a low and high temperature peak. The low-temperature LNT also shows a small low-temperature peak of NO desorption, whereas the catalysts of the current invention do not show such a low-temperature NO-release, as can be seen in Fig. 6.

From this Figure, it is clear that catalyst Example 1 has in average weaker NOₓ storage centers than low-temperature LNT, while catalyst example 2 has some centers which are stronger than those of low-temperature LNT, obviously due to the presence of Lanthanum. Generally, the difference is small and it can be expected that the desulfurisation near 600 °C as for low-temperature LNT will be enough to desulfurise the catalysts of the invention. In general, the catalysts of this invention have also shown to be more tolerant to sulfur poisoning relative to standard LNT, especially catalyst Example 1. Catalysts of the invention and low-temperature LNT released basically NO₂ during desorption in contrast for standard LNT, for which the basic component was NO for both peaks.

Despite of limited NO storage capacity, the NO retention time (time till NO break-through above 5ppm) at low temperatures was comparable with other devices, as shown in Table 4. This means that these multifunctional catalysts can also accumulate NO during cold-start. In addition, there are always CO and HC during cold start conditions and it will lead to lean deNOₓ reaction on catalysts of this invention rather than to NO adsorption.

**Table 4: Retention time during NO adsorption at different temperatures SV=10000 1/h (time till the level of NO exceeded 5 ppm) Mixture: 750 ppm NO, O₂ 10 %, CO₂ 5 %, H₂O 5%, N₂ balance V = 3.3 l/min.**

| Catalyst | C min( ppm) / Time /sec | | | | | |
|---|---|---|---|---|---|---|
| | 100 °C | 150 °C | 200 °C | 250 °C | 300 °C | 350 °C |
| Example 1-ZrO₂ | 20 ppm / 0 s | 10 ppm 0 s | / 0/70s | 0/85s | 0 / 30s | 0/15s |
| Example 2 - La₂Zr₂O₇ | 40 ppm / 0 s | 10 ppm 0 s | / 0/65s | 0 /110s | 0/85s | 0 / 80s |
| LNT | 80 ppm / 0 s | 50 ppm 0 s | / 0/80 s | 0 / 165s | 0 / 160 s | 0/175 s |
| LT-LNT | 0 / 5s | 0/45s | 0 / 70s | 0/140s | 0/100s | 7 0ppm/ 0 s |
| DOC-Pt | 55 ppm / 0 s | 10 ppm / 0 s | 30 ppm / 0 s | 20 ppm / 0 s | 15 ppm / 0 s | - |
| DOC-Pt-Pd | 0 / 60s | 0 / 50s | 0/100s | 0 / 70s | 0 / 40s | 7 ppm/ 0 s |

### NO oxidation:

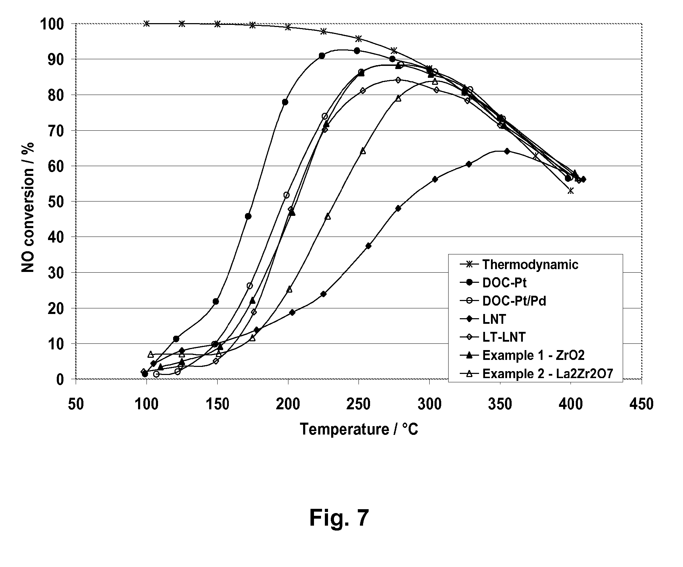

The data on NO oxidation are shown in Figure 7. Multifunctional catalysts of the current invention were more active than standard commercial LNTs and provided reasonable amount of NO₂ to exhaust. This is important for some applications like CRT (continuous regeneration of filter with NO₂ assistance, basically for trucks and commercial vehicles and for some SCR applications). The activity of catalysts Example 1 and Example 2 was lower than for commercial Pt-DOC, but catalyst Example 1 had comparable NO oxidation relative to Pt-Pd DOC and low-temperature LNT. However, the testing conditions for NO oxidation were artificial, without reductant CO and HC and under real conditions multifunctional catalyst will follow lean deNOₓ reaction as described above. Anyway, multifunctional catalysts can provide sufficient amount of NO₂ in the absence of reductant.

### Conclusion:

Based on the results obtained, it has been shown that the multifunctional catalysts of this invention in general can be installed as universal device for Diesel aftertreatment to cope with CO, HC and NOx emissions and they can be installed upstream of DPF instead of DOC.

Under cold-start conditions and for low-speed driving, the catalysts according to the current invention can provide CO and HC light-off and NOₓ reduction basically due to lean deNOₓ reaction using CO and HC emitted from the engine.

When temperatures are exceeding 175 °C, the catalyst can be effective under lean-rich mode of operation providing reasonable NOₓ conversion up to 350 °C, which is sufficient as exhaust gas temperatures above 350 °C are rare for Diesel passenger cars.

For heavy-duty applications, the catalysts of this invention can be used as pre-catalysts for LNT or SCR catalysts, significantly reducing NOₓ concentrations before LNT and SCR catalysts and facilitating their operations, also providing NOₓ conversions at low temperatures where these devices are not effective.

For an additional LNT, a lower volume LNT will be required and it will have a decrease PGM loading, because instead of DOC and LNT the multifunctional catalyst and a LNT will be installed with reduced size and lower PGM loading.

So generally, the multifunctional catalyst of the invention could operate as DOC and lean deNOₓ catalyst, as low-temperature LNT and catalyst for NO oxidation, as NO accumulator, also providing standard LNT function up to 350°C. In addition, it has better activity than specialized devices which are currently used and are designed to operate in their own areas, namely providing better CO and HC oxidation than commercial DOCs with high Pt or Pt-Pd loading, better and close to complete NOₓ reduction at 150 °C for lean deNOₓ reaction in contrast to Pt-only DOC with high Pt loading, allowing better NOₓ reduction than low-temperature LNT under lean-rich cycles, including low-temperatures for which low-temperature LNT were designed. Lanthanum-containing catalysts of this invention do not only show better NOₓ conversion than standard Pt-Rh-Ba LNT, but are able to compete with this LNT up to 350°C under high NO concentrations.

Depending on the application, the formulation can be easily changed from less basic ZrO₂ to more basic La₂Zr₂O₇ with also some intermediate formulations containing less La than Zr. In this context, it is also possible that up to 50% of Lanthanum oxide can be replaced by other light-weight lanthanides, namely Pr, Nd and Sm, while Ba (barium), Ce (cerium) and heavy-weight lanthanide oxides like Y (yttrium) and Yb (ytterbium), decreased the activity of the catalyst, especially under lean-rich mode of operation.

## Claims

1. A catalyst material for exhaust gas cleaning of combustion engine driven vehicles, especially of Diesel engine vehicles, comprising Platinum and Rhodium combined with
a. Aluminum oxide and Zirconium oxide,
b. Lanthanum Zirconium oxide or
c. mixtures thereof
on a preliminary acid treated catalyst carrier material.

2. A catalyst material according to claim 1,
**characterized in that**
the catalyst carrier material is cordierite or cordierite coated with a high-surface-area refractory material, preferably alumina washcoated cordierite.

3. A catalyst material according to claim 1 or 2,
**characterized in that**
the catalyst carrier material is acid pre-treated, preferably with oxalic acid, or nitric acid, or hydrochloric acid or citric acid.

4. A process for the preparation of a catalytic material for exhaust gas cleaning of combustion engine driven vehicles, especially of Diesel engine vehicles, comprising the steps of
a) preliminary treatment of a catalyst carrier material with an acid at elevated temperatures up to 100°C;
b) impregnation of the acid treated carrier material of a) with an aqueous or non-aqueous solution of Aluminum and Zirconium salt or Zirconium and Lanthanum salt or Aluminum, Zirconium and Lanthanum salt;
c) calcination of the product of b) at a temperature ≥ 800°C;
d) impregnation of the product of c) with an aqueous or non-aqueous solution of Platinum and Rhodium salt and;
e) calcination of the product of d) at a temperature ≥ 500 °C.

5. A process according to claim 4,
**characterized in that**
the catalyst carrier material is selected from cordierite or cordierite coated with a high-surface-area refractory material, preferably alumina washcoated cordierite.

6. A process according to claim 4 or 5,
**characterized in that**
in step a) the acid is selected from oxalic acid, or nitric acid, or hydrochloric acid or citric acid.

7. A process according to one of the claims 4 to 6,
**characterized in that**
impregnation in step b) and/or d) is carried out in the presence of citric acid and/or ammonium salt of citric acid.

8. A process according to one of the claims 4 to 7,
**characterized in that**
impregnation in step d) is carried out in the presence of urea.

9. A catalytic material for exhaust gas cleaning of combustion engine driven vehicles, especially of Diesel engine vehicles, which can be prepared by a process according to one of the claims 4 to 8.

10. Catalyst for exhaust-gas cleaning of combustion engine driven vehicles, especially Diesel vehicles, containing a catalytic material according to one of the claims 1 to 3 or 9.

11. Catalytic system for combustion engine driven vehicles, especially Diesel vehicles, containing a catalyst according to claim 10 and at least one additional exhaust gas cleaning device.

12. Catalytic system according to claim 11,
**characterized in that**
the catalytic system contains a Diesel Particle Filter (DPF) as an additional exhaust gas cleaning device whereby the DPF is installed downstream from the catalyst.

13. Use of a catalytic material according to one of the claims 1 to 3 or 9 for the production of a multi-functional catalyst for exhaust-gas cleaning of combustion engine driven vehicles.

## Amended claims

### Amended claims in accordance with Rule 137(2) EPC.

**1.** A process for the preparation of a catalytic material for exhaust gas cleaning of combustion engine driven vehicles, especially of Diesel engine vehicles, comprising the steps of
a) preliminary treatment of a catalyst carrier material with an acid at elevated temperatures up to 100°C;
b) impregnation of the acid treated carrier material of a) with an aqueous or non-aqueous solution of Aluminum and Zirconium salt or Zirconium and Lanthanum salt or Aluminum, Zirconium and Lanthanum salt;
c) calcination of the product of b) at a temperature ≥ 800°C;
d) impregnation of the product of c) with an aqueous or non-aqueous solution of Platinum and Rhodium salt and;
e) calcination of the product of d) at a temperature ≥ 500°C.

**2.** A process according to claim 1,
**characterized in that**
the catalyst carrier material is selected from cordierite or cordierite coated with a high-surface-area refractory material, preferably alumina washcoated cordierite.

**3.** A process according to claim 1 or 2,
**characterized in that**
in step a) the acid is selected from oxalic acid, or nitric acid, or hydrochloric acid or citric acid.

**4.** A process according to one of the preceding claims,
**characterized in that**
impregnation in step b) and/or d) is carried out in the presence of citric acid and/or ammonium salt of citric acid.

**5.** A process according to one of the preceding claims,
**characterized in that**
impregnation in step d) is carried out in the presence of urea.

**6.** A catalytic material for exhaust gas cleaning of combustion engine driven vehicles, especially of Diesel engine vehicles, which can be prepared by a process according to one of the claims 1 to 5.

**7.** Catalyst for exhaust-gas cleaning of combustion engine driven vehicles, especially Diesel vehicles, containing a catalytic material according to claim 6.

**8.** Catalytic system for combustion engine driven vehicles, especially Diesel vehicles, containing a catalyst according to claim 7 and at least one additional exhaust gas cleaning device.

**9.** Catalytic system according to claim 8,
**characterized in that**
the catalytic system contains a Diesel Particle Filter (DPF) as an additional exhaust gas cleaning device whereby the DPF is installed downstream from the catalyst.

**10.** Use of a catalytic material according to claim 6 for the production of a multifunctional catalyst for exhaust-gas cleaning of combustion engine driven vehicles.
